# EUROPEAN PATENT APPLICATION

(11) **EP 1 935 619 A2**
(43) Date of publication of application: **25.06.2008**
(21) Application number: 07022570.1
(22) Date of filing: 21.11.2007
(51) Int. Cl.: B29C 65/18, B65B 51/30

(54) **Heat - sealing apparatus**

(30) Priority: 19.12.2006 JP 2006341240
(71) Applicant: Toyo Jidoki Co., Ltd., Tokyo (JP)
(72) Inventor: Naoki, Shigeru, Iwakuni-shi Yamaguchi (JP); Koga, Shoichi, Iwakuni-shi Yamaguchi (JP)
(74) Representative: Leinweber & Zimmermann

(57) **Abstract**

A heat-sealing apparatus (50,81) enabling a hot plate-mounting and adjusting operation to be performed easily, simply and rapidly and capable of minimizing the change of the sealing condition has a first hot plate (9) and a second hot plate (21) that are respectively secured to the distal ends of bolts (15,27) inserted through holes (7b,19d) in first and second hot plate-mounting blocks (7,19). The bolts (15,27) are urged away from the hot plates (9,21) by wave washers (51,61), whereby mounting surfaces (9b,21b) of the hot plates (9,21) are pressed against support surfaces (7a,19c) of the blocks (7,19). A clearance is provided between the outer periphery of each bolt (15,27) and a hole through which it is inserted. Thus, the hot plates (9,21) can thermally expand and contract without being restrained by the blocks (7,19).

## Description

### BACKGROUND OF THE INVENTION

### 1. Field of the Invention

The present invention relates to a heat-sealing apparatus that seals together superimposed film sheets by pressing them between a pair of opposed hot plates. More particularly, the present invention relates to a heat-sealing apparatus that enables hot plates to be readily mounted in correct position to hot plate-retaining members, i.e. hot plate-mounting blocks.

### 2. Discussion of Related Art

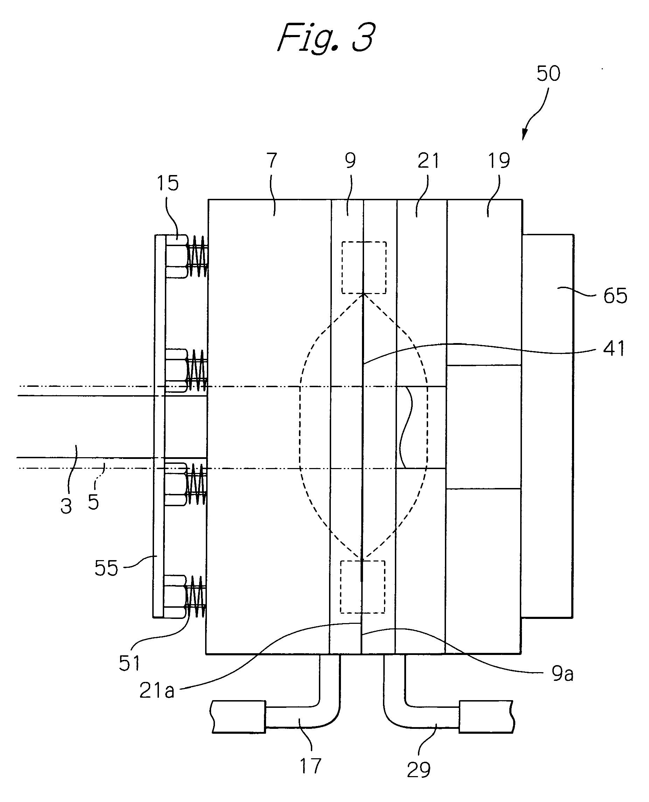

Conventionally, heat sealing has been performed for food packaging bags, for example, in such a manner that a pair of hot plates is pressed against seal portions of superimposed film sheets from both sides thereof to seal together the seal portions of the film sheets. Regarding the hot plates also, various improvements have been proposed. In Japanese Utility Model Application Publication No. Hei 4-128208, for example, shows in Fig. 3 thereof a conventional support structure for hot plates and a basic structure in which the hot plates are advanced and retracted relative to each other, and also proposes a structure that prevents drops of water from being sealed between seal surfaces. Japanese Patent Application Publication No. Hei 11-91732 discloses a structure in which heat seal teeth are detachably attached to heater blocks so that it is possible to readily cope with various widths of seal portions.

Usually, hot plates that directly press film sheets therebetween are each integrally and fixedly secured to a hot plate-mounting block with a thermal insulating plate interposed therebetween by using bolts or the like. In the above-mentioned Japanese Patent Application Publication No. Hei 11-91732, the heater blocks that incorporate heaters therein are secured to movable support members with bolts.

Generally, hot plates used in heat-sealing apparatus are metallic and support members or hot plate-mounting blocks to which the hot plates are secured are also metallic. In some cases, the hot plates and the hot plate-mounting blocks are made of different metallic materials. In such cases, the thermal expansion coefficients of the materials are different from each other. Therefore, when the heat-sealing apparatus is used with the hot plates secured to the mounting blocks with bolts, heating of the hot plates produces a difference in expansion between the hot plates and the mounting blocks, causing deformation of the pressing surfaces of the hot plates that are pressed against the film sheets. Consequently, the pressing surfaces of the hot plates cannot be brought into press contact with the whole seal portions uniformly, resulting in a seal failure.

Even if the hot plates and the mounting blocks are made of the same material, the following problem occurs. Usually, the heaters are attached to the hot plates, and the hot plates are secured to the mounting blocks with thermal insulating plates interposed therebetween. Accordingly, during heating, a difference in temperature is produced between the hot plates incorporating the heaters and the mounting blocks, causing a difference in expansion. Thus, the same problem as the above occurs although there is a difference in the degree of seriousness of the problem. The conventional practice for coping with such a problem is to dispose a distortion correcting plate between each mounting block and the associated thermal insulating plate and to bond liners to appropriate positions on the distortion correcting plate to adjust so that the pressing surface of each hot plate becomes flat when the hot plate has been heated to a predetermined temperature.

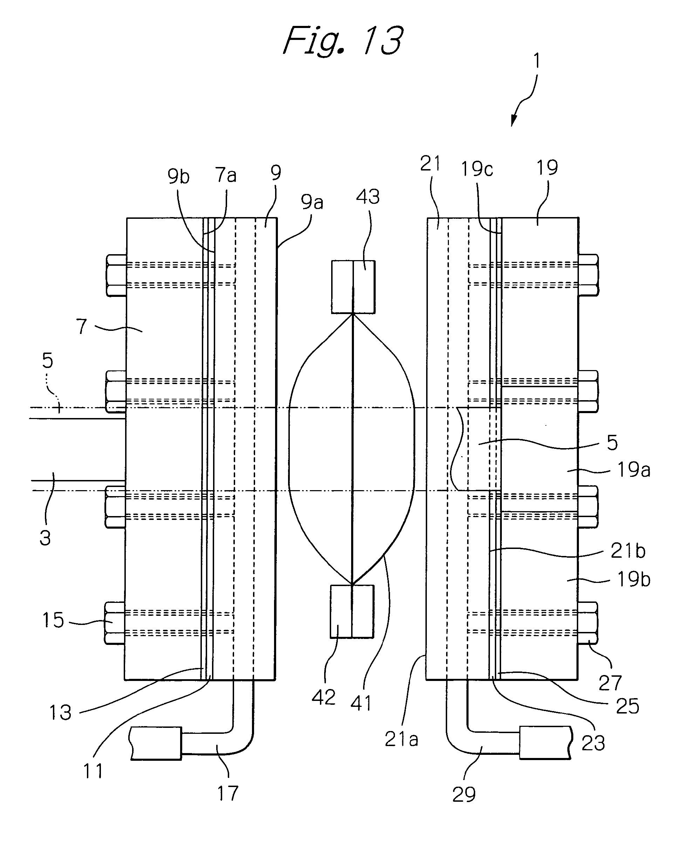

To solve the above-described problem, the present inventor inspected the deformation of hot plates and hot plate-mounting blocks in a conventional hot plate-mounting structure. The results of the inspection will be explained below with reference to Figs. 13 to 16 with regard to an example of sealing the opening of a packaging bag in automatic packaging of food products. In the figures, reference numeral 41 denotes a packaging bag used in automatic packaging of food products, and reference numerals 42 and 43 denote a pair of grippers that grip the laterally opposite side edge portions of the bag 41. The figures show the bag 41 that has moved to a sealing step after the completion of filling the bag 41 with the contents.

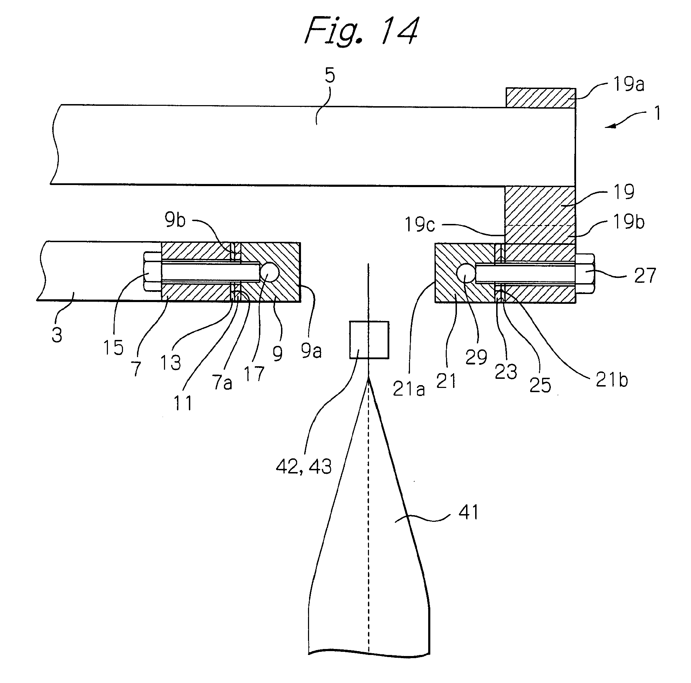

Figs. 13 and 14 are a plan view and a sectional side view, respectively, showing an essential part of a heat-sealing apparatus 1 according to a conventional related art. The heat-sealing apparatus 1 has first and second advancing and retracting shafts 3 and 5 that are vertically spaced to extend in the same axial direction and axially advanced and retracted in opposite directions to each other by a driving device (not shown). A first hot plate-mounting block (hereinafter referred to as "first block") 7 is secured to the distal end of the first advancing and retracting shaft 3 by an appropriate securing device. The first block 7 is an elongate member extending substantially perpendicular to the longitudinal axis of the first advancing and retracting shaft 3 and having a substantially square sectional configuration. The first block 7 has a support surface 7a formed by one vertical surface thereof (right-hand surface as viewed in the figures). A mounting surface 9b of a first hot plate 9 is mounted to the support surface 7a of the first block 7, with a thin plate-shaped distortion correcting plate 13 and a thermal insulating plate 11 interposed therebetween. In this example, the first hot plate 9 is secured to the first block 7 by using four bolts 15. The first hot plate 9 is an elongate member having a substantially square sectional configuration and substantially the same length as that of the first block 7. A heater 17 is inserted and secured in a hole longitudinally formed in the first hot plate 9.

The first block 7 and the distortion correcting plate 13 are made of the same metallic material. The first hot plate 9 is made of a metallic material different in thermal expansion coefficient from the metallic material of the first block 7 and the distortion correcting plate 13. The thermal insulating plate 11 is made of a ceramic or other inorganic material, a heat-resistant resin, or a composite material of them. It should be noted that metallic liners (not shown) having an appropriate thickness are bonded to appropriate positions on the side of the distortion correcting plate 13 that faces the first block 7, as has been stated above, to obtain a desired flatness of a pressing surface 9a of the first hot plate 9.

A second hot plate-mounting block (hereinafter referred to as "second block") 19 is secured to the distal end of the second advancing and retracting shaft 5 by an appropriate securing device. The second block 19 has a mounting portion 19a at the top thereof and a body portion 19b integrally formed with the mounting portion 19a at the lower side thereof. The body portion 19b has the same length as that of the first block 7 and extends parallel thereto. The second block 19 is secured to the second advancing and retracting shaft 5 at the mounting portion 19a. The second block 19 has a support surface 19c formed by one vertical surface (left-hand surface as viewed in the figures) of the body portion 19b. A mounting surface 21b of a second hot plate 21 is mounted to the support surface 19c of the second block body portion 19b, with a thin plate-shaped distortion correcting plate 25 and a thermal insulating plate 23 interposed therebetween. The second hot plate 21 is secured to the second block 19 by using four bolts 27. The second hot plate 21 is also an elongate member having a substantially square sectional configuration and substantially the same length as that of the body portion 19b of the second block 19. A heater 29 is inserted and secured in a hole longitudinally formed in the second hot plate 21. It should be noted that the constituent materials of the second block 19 and other members described above are the same as those of the foregoing first block 7 and other corresponding members. Liners are appropriately bonded to the side of the distortion correcting plate 25 that faces the second block 19 to obtain a desired flatness of a pressing surface 21a of the second hot plate 21, as in the case of the above.

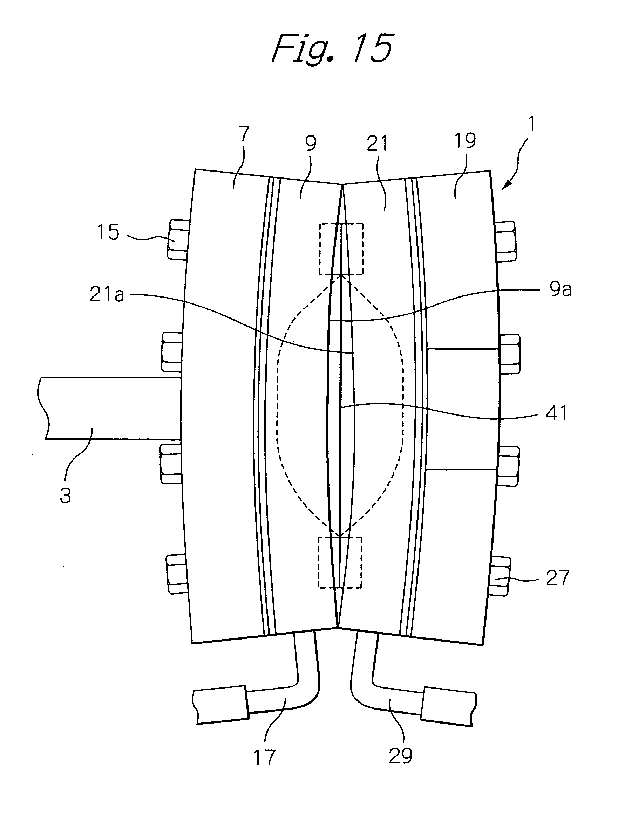

Fig. 15 shows a state where the first and second hot plates 9 and 21 have been heated to a desired sealing temperature by the respective heaters 17 and 29. When the hot plates 9 and 21 have not yet been heated and are at an ordinary room temperature before the start of the operation, the pressing surfaces 9a and 21a of the hot plates 9 and 21 are flat. However, as the temperature rises as a result of heating, the pressing surfaces 9a and 21a are gradually deformed concavely. Because the hot plates 9 and 21 are firmly connected to the blocks 7 and 19 by the bolts 15 and 27, the combinations of the hot plates 9 and 21 and the blocks 7 and 19 are each deformed as one unit up to a certain temperature. When the temperature rises beyond the certain temperature level, sliding occurs between the hot plate 9 and the block 7 and between the hot plate 21 and the block 19, so that the hot plates 9 and 21 will not be curved any more.

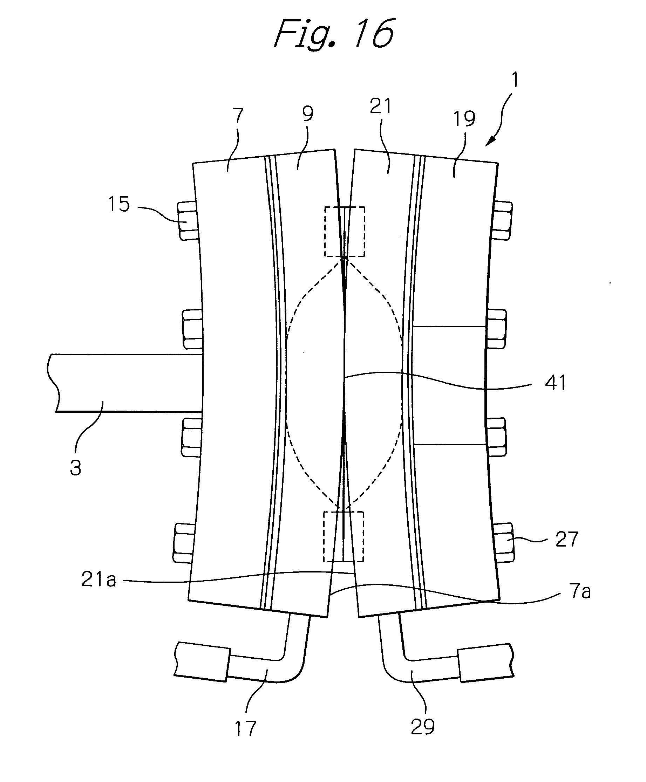

When the heating is stopped to allow the sealing temperature to lower gradually, the hot plate 9 and the block 7 are deformed in the opposite direction to the above, and so are the hot plate 21 and the block 19. Consequently, the pressing surfaces 9a and 21a of the hot plates 9 and 21 are curved convexly, as shown in Fig. 16, after becoming somewhat flat, which is not so flat as in the non-heating state. When the hot plates 9 and 21 are returned to the ordinary room temperature, the pressing surfaces 9a and 21a remain curved convexly. In other words, the pressing surfaces 9a and 21a will not return to the flat state any longer because of the sticking between the hot plate 9 and the block 7 and between the hot plate 21 and the block 19 after the occurrence of sliding therebetween during the rise of temperature. When the hot plates 9 and 21 are heated again, the pressing surfaces 9a and 21a are curved concavely after becoming somewhat flat. At a certain point of the heating, slide occurs again between the hot plate 9 and the block 7 and between the hot plate 21 and the block 19, so that the hot plates 9 and 21 will not be curved any more.

If the above-described distortion occurs, a gap is produced between the pressing surfaces 9a and 21a of the hot plates 9 and 21 when pressed against each other. Accordingly, a satisfactory sealing condition cannot be obtained. To cope with this problem, conventionally, liners are bonded to appropriate positions on the distortion correcting plates 13 and 25 and an adjustment is made so that the pressing surfaces 9a and 21a of the hot plates 9 and 21 become flat when the hot plates 9 and 21 are heated to a predetermined sealing temperature, as has been stated above. However, the adjustment needs to be repeated many times until an appropriate condition of the hot plates 9 and 21 is obtained. The adjustment operation itself is very complicated and requires a high level of skill. Even if the hot plates 9 and 21 have been set in correct conditions successfully, it is necessary to make an adjustment again at the time of reheating, changing the set temperature, replacing the hot plates 9 and 21, and so forth. In addition, the distortion condition may change with time. A readjustment is needed every time the distortion condition changes. Under these circumstances, we examined a measure to solve drastically the problem caused by the distortion of the hot plates 9 and 21 in view of the overall deformation of the hot plates 9 and 21 and the mounting blocks 7 and 19, the details of which have been clarified by the inspection conducted by the present inventor.

It should be noted that we discussed the overall structure in which the hot plate 9 (21), the mounting block 7 (19) and the distortion correcting plate 13 (25) are integrally secured to each other with the bolts 15 (27). During our inspection, we also examined the temperature difference between the pressing surface 9a (21a) and the mounting surface 9b (21b) of the hot plate 9 (21) when heated, and we found that the pressing surface 9a (21a) is higher in temperature than the mounting surface 9b (21a). Therefore, when the hot plate 9 (21) is considered as a single element, it should be deformed so that the pressing surface 9a (21a) becomes convex. Nevertheless, when heated, the overall heat-sealing structure is deformed so that the pressing surface 9a (21a) becomes concave as stated above. It is deemed from this fact that the amount of deformation of the mounting block 7 (19) is so large that the amount of deformation of the hot plate 9 (21) as a single element is compensated for, and moreover, the pressing surface 9a (21a) is made concave. The situation should differ if the relationship in thermal expansion coefficient between the hot plate 9 (21), the mounting block 7 (19), and so forth differs. Even if the hot plate 9 (21) and the mounting block 7 (19) are formed from the same material, if the mounting structure is the same as the above, the condition of heat dissipation differs between the pressing surface 9a (21a) and the mounting surface 9b (21b) of the hot plate 9 (21), causing a temperature difference. Consequently, the hot plate 9 (21) itself is deformed, so that the pressing surface 9a (21a) of the hot plate 9 (21) fails to become flat, although the distortion is not so large as stated above. There is also a temperature difference between the hot plate 9 (21) and the mounting block 7 (19), and a difference is produced in the amount of expansion therebetween, as has been stated above. We performed studies in view of these points in making the present invention.

### SUMMARY OF THE INVENTION

The present invention has been made in view of the above-described problems associated with the related art.

Accordingly, an object of the present invention is to provide a heat-sealing apparatus enabling the hot plate mounting and adjusting operation to be performed easily, simply and rapidly.

Another object of the present invention is to provide a heat-sealing apparatus capable of minimizing the change of the sealing condition.

The present invention is applied to a heat-sealing apparatus having a pair of opposed hot plates and hot plate-mounting blocks to which the hot plates are mounted, respectively, in which superimposed film sheets are pressed between the hot plates to thermoweld them together. According to a first aspect of the present invention, the heat-sealing apparatus is arranged as follows. The hot plates are respectively provided with pressing surfaces adapted to be pressed against each other with the film sheets held therebetween during sealing, and further provided with mounting surfaces formed at the opposite sides to the pressing surfaces. The hot plate-mounting blocks are respectively provided with support surfaces that retain the mounting surfaces, respectively. The hot plates are mounted to the hot plate-mounting blocks in such a manner that the mounting surfaces are pressed against the support surfaces, and that the hot plates can thermally expand and contract in a sealing direction without being restrained by the hot plate-mounting blocks. With this arrangement, the desired flatness of the hot plates can be kept, and satisfactory sealing can be performed.

In one embodiment, the constituent material of the hot plates and the constituent material of the hot plate-mounting blocks differ in thermal expansion coefficient from each other. In this case also, the hot plates can thermally expand and contract in the sealing direction without being restrained by the hot plate-mounting blocks owing to employing the above-described arrangement. Accordingly, the desired flatness of the hot plates can be kept, and satisfactory sealing can be performed.

In one embodiment, the hot plates are each retained by the support surface at a part of the mounting surface thereof. With this arrangement, it is possible to reduce the difference in the degree of exposure between the pressing surface and the mounting surface of each hot plate and hence possible to reduce the curvature of the hot plate itself. Thus, even more satisfactory sealing can be performed.

In one embodiment, the hot plates have been formed in advance so that the pressing surfaces are concavely or convexly curved at an ordinary room temperature, allowing for an amount of deformation when the hot plates are heated to a predetermined sealing temperature. With this arrangement, a satisfactory flatness of the pressing surfaces can be obtained during heating, and thus satisfactory sealing can be performed.

In one embodiment, the hot plate-mounting blocks are provided with guide portions that position the hot plates in the vertical direction. With this arrangement, the hot plates are positioned in the vertical direction to prevent relative positional displacement between them and tilting thereof. Thus, it is possible to perform sealing straight in the horizontal direction.

In one embodiment, the hot plate-mounting blocks are equipped with adjustment pins capable of positional adjustment in the rotational direction. Each adjustment pin has an eccentric shank portion formed at an end thereof closer to the associated hot plate. The eccentric shank portion of the adjustment pin is fitted in a slot that is formed on the mounting surface of the hot plate so as to be elongated in the sealing direction. Accordingly, the mounting position of the hot plate can be readily adjusted by properly rotating the adjustment pin.

In one embodiment, the hot plates are each secured to one end of each of a plurality of shaft-shaped members spaced in the sealing direction and inserted through respective holes formed in the associated hot plate-mounting block. The shaft-shaped members are urged by urging members toward the other ends thereof. All the shaft-shaped members, except at most one of them, are provided with clearances in the holes at least in the sealing direction. This relatively simple arrangement enables the hot plates to thermally expand and contract without being restrained by the hot plate-mounting blocks as stated above.

In one embodiment, the heat-sealing apparatus further has fall-preventing plates that prevent movement of the shaft-shaped members away from the hot plates. This arrangement can prevent loosening of the portions of the shaft-shaped members that are fitted to the hot plates.

In one embodiment, the hot plates are each fixedly secured to the associated hot plate-mounting block at one portion thereof, and the heat-sealing apparatus further has one or more shaft-shaped members provided for each combination of the hot plate and the hot plate-mounting block. The shaft-shaped members are spaced in the sealing direction and each mounted at one end thereof to either one of the hot plate and the hot plate-mounting block. The other end of each shaft-shaped member extends toward the other of the hot plate and the hot plate-mounting block and is inserted into a hole formed in the other of the hot plate and the hot plate-mounting block with a clearance at least in the sealing direction. In this case also, because each hot plate is fixedly secured at only one portion thereof, the hot plate can thermally expand and contract without being restrained by the hot plate-mounting block.

In one embodiment, the one or more shaft-shaped members are each mounted at the one end in such a manner that the position thereof in the rotational direction is adjustable. The other end of each shaft-shaped member is eccentric with respect to the one end, and the hole, in which the other end of the shaft-shaped member is inserted, is a slot elongated in the sealing direction. This arrangement enables adjustment of the mounting condition of the hot plates by using the shaft-shaped members.

In addition, the present invention is applied to a heat-sealing apparatus having a pair of opposed hot plates and hot plate-mounting blocks to which the hot plates are mounted, respectively, in which superimposed film sheets are pressed between the hot plates to thermoweld them together. According to a second aspect of the present invention, the heat-sealing apparatus is arranged as follows. The hot plates are respectively provided with pressing surfaces adapted to be pressed against each other with the film sheets held therebetween during sealing, and further provided with mounting surfaces formed on respective surfaces extending substantially perpendicular to the pressing surfaces. The hot plates are mounted on respective support surfaces formed on the hot plate-mounting blocks. With this arrangement, even if each hot plate and the associated hot plate-mounting block are curved as one unit, the curvature will not influence the flatness of the pressing surface of the hot plate. Therefore, satisfactory sealing can be performed.

Thus, according to the first aspect of the present invention, the hot plates can thermally expand and contract independently of the hot plate-mounting blocks, without being restrained by the hot plate-mounting blocks. Accordingly, it is possible to minimize the distortion of the pressing surfaces of the hot plates due to the influence of the hot plate-mounting blocks as in the conventional apparatus. The hot plates can be mounted to the hot plate-mounting blocks without the need to repeat adjustment many times as in the past. The adjusting operation can be performed easily, simply and rapidly.

Further, the curvature of the hot plates can be reduced to a very small degree by reducing the difference in exposed area between the pressing surface and the mounting surface of each hot plate. Accordingly, sealing performance can be further improved.

Further, a satisfactory flatness of the pressing surfaces can be obtained during heating by forming the hot plates so that the pressing surfaces thereof are concavely or convexly curved at an ordinary room temperature, allowing for an amount of deformation when the hot plates are heated to a predetermined sealing temperature. Thus, a satisfactory flatness of the pressing surface can be obtained during heating and satisfactory sealing can be performed.

Further, the mounting position of each hot plate can be readily adjusted by an arrangement in which the hot plate-mounting blocks are provided with guide portions that position the hot plates in the vertical direction, or an arrangement in which the hot plate-mounting blocks are equipped with adjustment pins capable of positional adjustment in the rotational direction, and eccentric shank portions of the pins are fitted in slots formed in the hot plates so as to be elongated in the sealing direction.

Further, the hot plates are allowed to thermally expand and contract without being restrained by the hot plate-mounting blocks by arranging such that the hot plates are each fixedly secured to one end of each of a plurality of shaft-shaped members inserted through respective holes formed in the hot plate-mounting blocks, and the shaft-shaped members are urged by urging members toward the other ends thereof and provided with clearances in the holes at least in the sealing direction.

According to the second aspect of the present invention, the distortion of the hot plates in the horizontal plane can be minimized although they may be curved in the vertical direction. Accordingly, satisfactory sealing can be performed. In addition, the hot plates can be mounted to the hot plate-mounting blocks without the need to repeat adjustment many times as in the past. The adjusting operation can be performed easily, simply and rapidly.

Other objects and advantages of the present invention will become apparent from the following detailed description of illustrated embodiments of the invention.

### BRIEF DESCRIPTION OF THE DRAWINGS

Fig. 1 is a plan view of an essential part of a heat-sealing apparatus according to a first embodiment of the present invention.
Fig. 2 is a sectional side view of the apparatus shown in Fig. 1.
Fig. 3 is a plan view of the apparatus shown in Fig. 1, illustrating a state where hot plates are pressed against each other.
Fig. 4 is a sectional side view of the apparatus shown in Fig. 3.
Fig. 5 is an explanatory view showing hot plates used in a heat-sealing apparatus according to a second embodiment of the present invention.
Fig. 6 is a plan view of an essential part of the heat-sealing apparatus according to the second embodiment of the present invention, illustrating a state where the hot plates are separate from each other.
Fig. 7 is a sectional side view of the apparatus shown in Fig. 6.
Fig. 8 is an explanatory view showing a mechanism for adjusting the mounting position of a hot plate.
Fig. 9 is a plan view of an essential part of a heat-sealing apparatus according to a third embodiment of the present invention, illustrating a state where hot plates are separate from each other.
Fig. 10 is a sectional side view of the apparatus shown in Fig. 9.
Fig. 11 is a plan view of the apparatus shown in Fig. 9, illustrating a state where the hot plates are pressed against each other.
Fig. 12 is a sectional side view of the apparatus shown in Fig. 11.
Fig. 13 is a plan view of a heat-sealing apparatus according to a related art.
Fig. 14 is a sectional side view of the apparatus shown in Fig. 13.
Fig. 15 is a plan view showing the way in which hot plates of the apparatus in Fig. 13 are curved when the hot plates are raised in temperature.
Fig. 16 is a plan view showing the way in which the hot plates of the apparatus in Fig. 13 are curved when the hot plates are lowered in temperature.

### DETAILED DESCRIPTION OF THE PREFERRED EMBODIMENTS

Embodiments of the present invention will be described below with reference to the accompanying drawings. It should be noted that the following embodiments are for illustrative purposes only, and that the scope of the present invention is not limited to these embodiments.

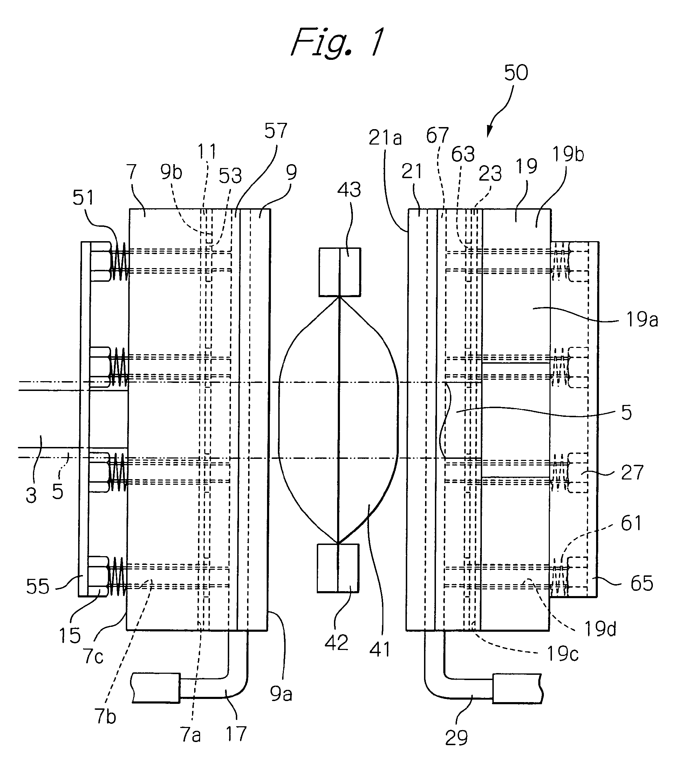

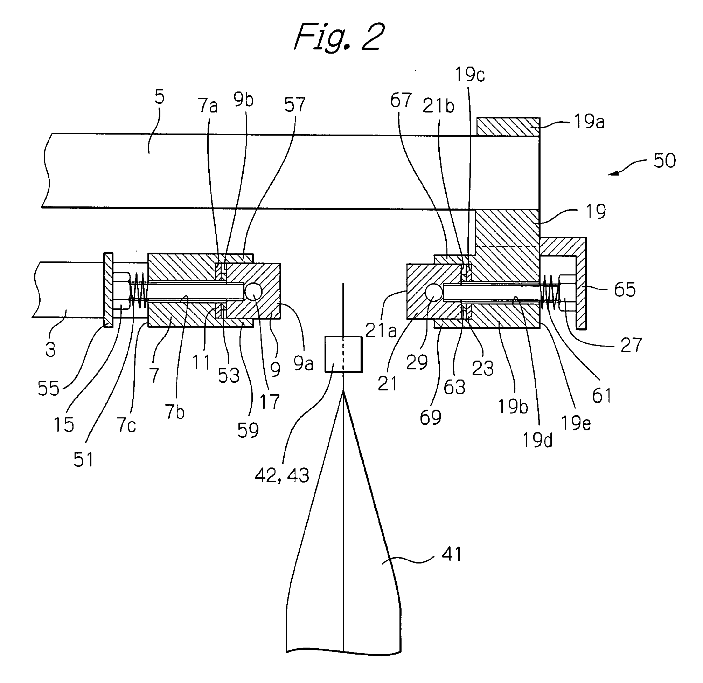

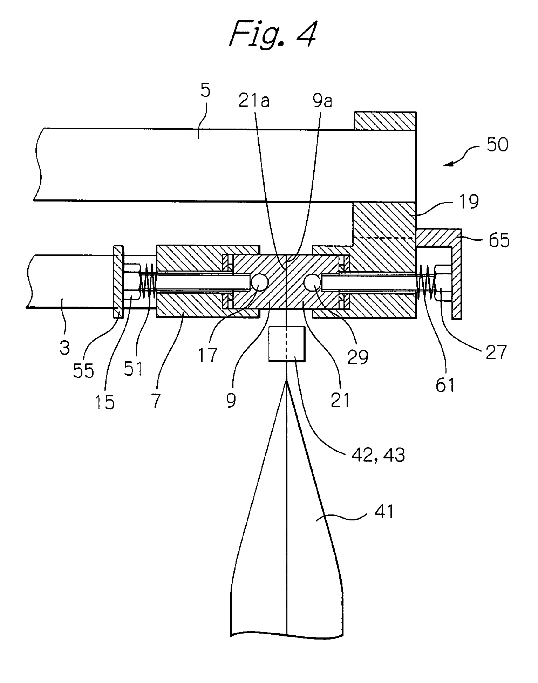

Figs. 1 to 4 show a heat-sealing apparatus 50 according to a first embodiment of the present invention. Figs. 1 and 2 are a plan view and a sectional side view, respectively, showing the heat-sealing apparatus 50 in a state where hot plates are separate from each other. Figs. 3 and 4 are a plan view and a sectional side view, respectively, showing a state where the hot plates are pressed against each other. In these figures, members corresponding to those of the conventional related art shown in Figs. 13 to 16 are denoted by using the same reference numerals as those in the related art, and a detailed description thereof is omitted.

The heat-sealing apparatus 50 according to this embodiment differs from the related art shown in Figs. 13 to 16 in that first and second hot plates 9 and 21 are not integrally and firmly secured to first and second hot plate-mounting blocks (hereinafter referred to simply as "blocks") 7 and 19, but mounted in such a manner that the hot plates 9 and 21 can thermally expand and contract freely independently of the blocks 7 and 19 without being restrained by them. This prevents the pressing surfaces of the hot plates 9 and 21 from being curved concavely or convexly as in the past.

The first hot plate 9 is secured to the distal ends of bolts 15 that are disposed in parallel in the sealing direction and inserted from the distal end sides thereof into holes 7b formed in the block 7. The bolts 15 are urged leftward as viewed in the figures by respective wave washers 51 provided as urging members between the heads of the bolts 15 and a rear surface 7c of the block 7. Thus, the first hot plate 9 is mounted to a support surface 7a of the block 7 with a thermal insulating plate 11 and liners 53 interposed therebetween. It should be noted that, unlike the liners that is bonded to the distortion correcting plate to obtain a flat surface in the related art, the liners 53 serves as a spacer that makes the exposed areas of the pressing surface 9a and the mounting surface 9b as close to each other as possible to minimize the curvature of the hot plate 9 itself. Accordingly, the liners 53 has a minimum necessary size. It should be noted that each bolt 15 has a step between a portion thereof that is threaded into the hot plate 9 and a shank portion above the threaded portion, and the shank portions have the same length. Accordingly, each bolt 15 can be set simply by screwing the threaded portion into the hot plate 9 completely, without the need of any adjustment.

A fall-preventing plate 55 is fixedly secured to a first advancing and retracting shaft 3 to prevent the bolts 15 from falling off. The bolts 15 do not firmly connect together the first block 7 and the first hot plate 9, as has been stated above. Therefore, the connection between the bolts 15 and the first hot plate 9 may be loosened by vibration or the like. The fall-preventing plate 55 retains the heads of the bolts 15 to prevent movement thereof, thereby preventing loosening of the connection between the bolts 15 and the first hot plate 9.

Regarding the relationship between the outer diameter of the bolts 15 and the inner diameter of the holes 7b of the block 7, a clearance is provided between each bolt 15 and the associated hole 7b at least in the longitudinal direction of the block 7, i.e. the sealing direction (in the vertical direction in Fig. 1) to allow the expansion and contraction of the hot plate 9 due to the influence of heat. It should be noted, however, that no clearance may be provided for at most one bolt 15. In this case also, the hot plate 9 can thermally expand and contract without being restrained by the block 7. Although in the above-described arrangement the heads of all the bolts 15 are separate from the block 7, at most one bolt 15 may integrally connect together the block 7 and the hot plate 9 in the same way as in the related art. In this case also, the hot plate 9 can thermally expand and contract without being restrained by the block 7. In this case, it is possible to adopt an arrangement in which the other bolts 15 are replaced with guide pins that are mounted to the block 7, and the distal ends of the guide pins are fitted in slots that are formed in the hot plate 9 so as to elongate in the sealing direction. The guide pins may be arranged like adjustment pins 83 and 85 in a second embodiment described later. In this case, slots corresponding to the adjustment pins 83 and 85 are formed in the hot plate 9 so that the mounting position of the hot plate 9 can be adjusted.

The first block 7 has plate-shaped guide portions 57 and 59 integrally formed thereon at the upper and lower sides thereof to extend in the longitudinal direction of the block 7. The guide portions 57 and 59 determine the positions of the upper and lower surfaces of the first hot plate 9, thereby enabling the first hot plate 9 to be positioned in the vertical direction even if there is a clearance in the vertical direction between the bolts 15 and the holes 7b.

The arrangement for mounting the second hot plate 21 to the second block 19 is similar to the above. That is, the second block 19 has a mounting portion 19a and a body portion 19b formed with holes 19d. The second hot plate 21 is secured to the distal ends of bolts 27 inserted through the holes 19d. The bolts 27 are urged rightward as viewed in the figures by wave washers 61 disposed between the heads of the bolts 27 and a rear surface 19e of the block 19, whereby the second hot plate 21 is retained at a mounting surface 21b thereof by a support surface 19c of the second block 19 with a thermal insulating plate 23 and liners 63 interposed therebetween. It should be noted that a fall-preventing plate 65 for preventing the bolts 27 from falling off is formed in an L-shape and fixedly secured to the second block 19. Reference numerals 67 and 69 denote guide portions for the second hot plate 21.

As will be clear from the above description, the bolts 15 and 27 used to mount the first and second hot plates 9 and 21 to the blocks 7 and 19, respectively, do not integrally and firmly connect together the hot plates 9 and 21 and the blocks 7 and 19. Even if the hot plate 9 (21) and the block 7 (19) are firmly connected by bolts 15 (27), the number of bolts 15 (27) used for this purpose is at most one. Therefore, the hot plate 9 and 21 can thermally expand and contract independently of the associated blocks 7 and 19. Accordingly, there is no possibility that the hot plate 9 (21) will be curved together with the block 7 (19) as one unit owing to a difference in expansion coefficient therebetween or a temperature difference during heating. Therefore, even if the temperature is raised to a predetermined sealing temperature, the flatness of the pressing surfaces 9a and 21a of the hot plates 9 and 21 is kept very satisfactorily, so that the pressing surfaces 9a and 21a closely contact the outer surfaces of the opposite walls of a bag 41, as shown in Figs. 3 and 4. Accordingly, no sealing failure will occur. Further, the bolts 15 and 27 can be set in position simply by screwing them into the associated hot plates 9 and 21 as far as predetermined portions thereof with the wave washers 51 and 61 interposed between their heads and the rear surfaces 7a and 21a of the blocks 7 and 21. There is no need to perform flatness adjustment for the pressing surfaces 9a and 21a of the hot plates 9 and 21 when mounted to the blocks 7 and 21. In addition, the temperature difference between the pressing surfaces 9a and 21a and the mounting surfaces 9b and 21b can be reduced by reducing the area of contact between the hot plates 9 and 21 and the blocks 7 and 19 or the thermal insulating plates 11 and 23 by using the liners 53 and 63. Consequently, the curvature of the hot plates 9 and 21 themselves can be reduced to an extremely low degree, and sealing can be performed even more reliably.

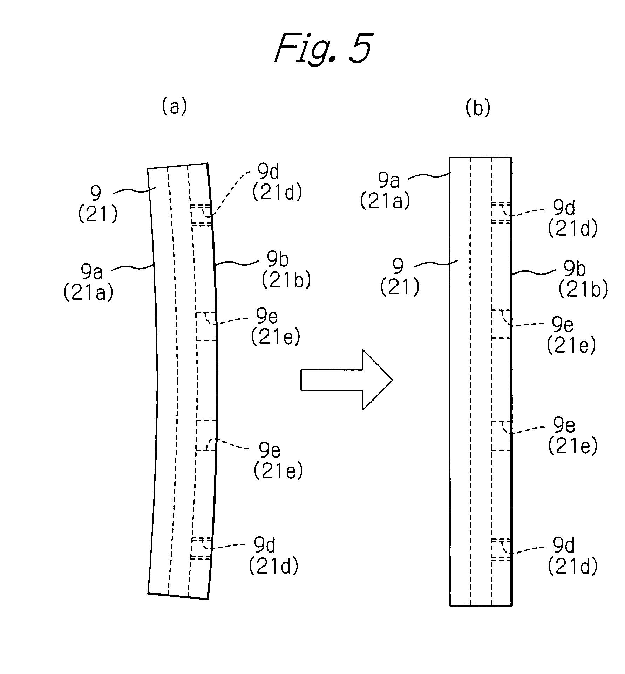

Next, a heat-sealing apparatus 81 according to a second embodiment of the present invention will be explained with reference to Figs. 5 to 8. It should be noted that members corresponding to the members in the first embodiment are denoted by the same reference numerals as those used in the first embodiment, and a detailed description thereof is omitted. The second embodiment differs from the first embodiment in the configuration of the hot plates 9 and 21 and the configuration of the liners 53 and 63, and in that the guide portions 57 and 59 for the first hot plate 9 and the guide portions 67 and 69 for the second hot plate 21 are replaced with other adjusting members. The points in which the second embodiment differs from the first embodiment will be explained below.

First, hot plates 9 and 21 in the second embodiment will be explained with reference to Fig. 5. The hot plates 9 and 21 are formed so that pressing surfaces 9a and 21a thereof are slightly curved concavely as shown in part (a) of Fig. 5 at an ordinary room temperature. The degree of the curvature of the pressing surfaces 9a and 21a has been set in advance so that the pressing surfaces 9a and 21a become flat as shown in part (b) of Fig. 5 when the hot plates 9 and 21 are heated to a predetermined sealing temperature. The degree of the curvature can be obtained experimentally. It should be noted that the hot plates 9 and 21 may be formed so that the pressing surfaces 9a and 21a are slightly curved convexly at an ordinary room temperature if the hot plate-mounting structure or other structure differs from that in this embodiment. Reference numerals 9d and 21d denote threaded holes in which bolts 15 and 27 are engaged when the hot plates 9 and 21 are mounted to mounting blocks 7 and 19, respectively, which have been explained in the first embodiment. In this embodiment, two bolts 15 are used for the first hot plate 9, and two bolts 27 are used for the second hot plate 21. Two slots 9e are formed in a mounting surface 9b of the first hot plate 9. The slots 9e are elongated in the sealing direction and arranged between the threaded holes 9d at a predetermined spacing in the sealing direction. Similarly, two slots 21e are formed in a mounting surface 21b of the second hot plate 21. The slots 21e are elongated in the sealing direction and arranged between the threaded holes 21d at a predetermined spacing in the sealing direction. The slots 9e and 21e will be explained later in detail.

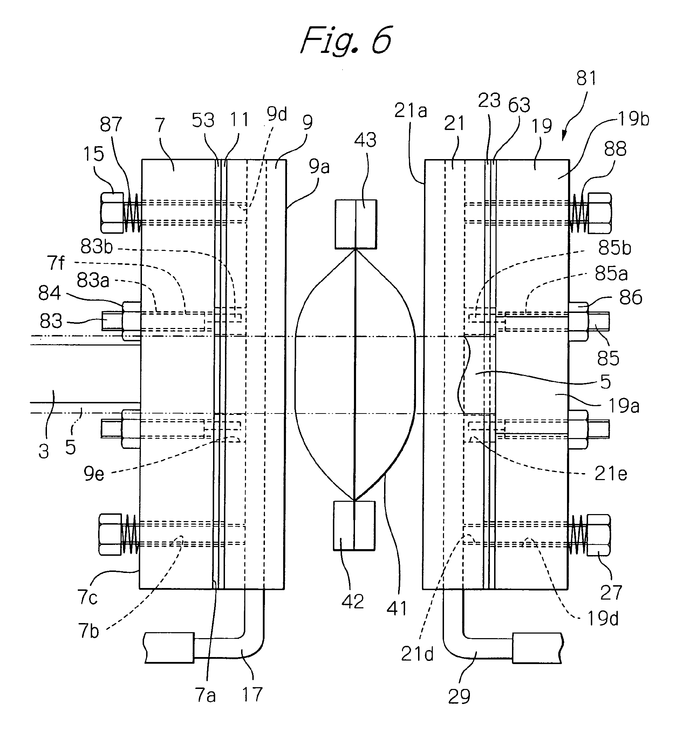

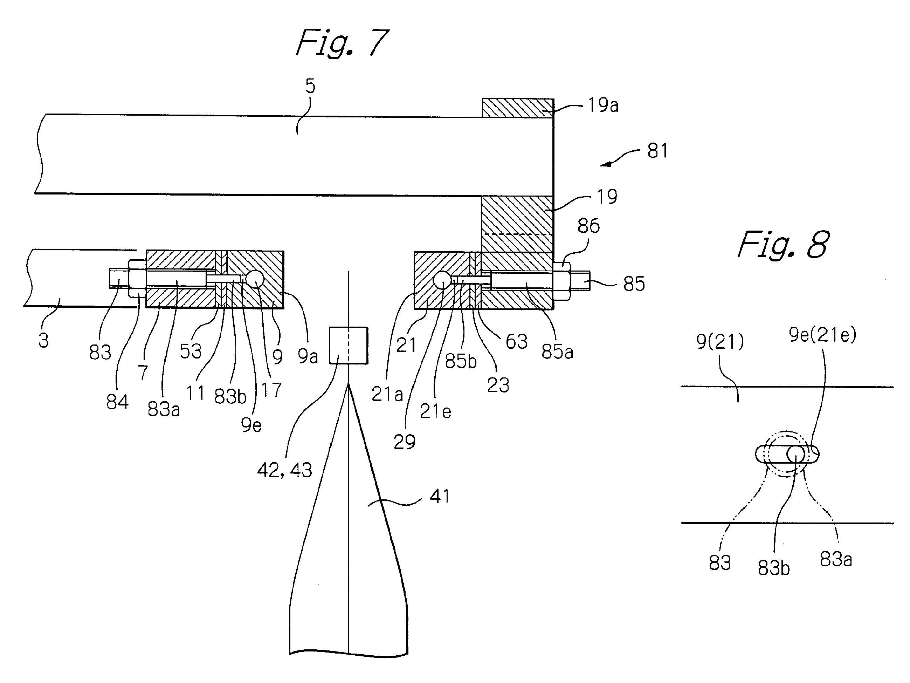

Figs. 6 and 7, which correspond to Figs. 1 and 2 showing the first embodiment, are a plan view and a sectional side view, respectively, showing the heat-sealing apparatus 81 according to the second embodiment in a state where the hot plates 9 and 21 are separate from each other. The liners 53 and 63 used in this embodiment differ in configuration from those used in the first embodiment, as has been stated above. The configuration of the liners 53 and 63 have the same configuration as that of the distortion correcting plates 13 and 25, which has been explained in connection with the related art. The liners 53 and 63 and the thermal insulating plates 11 and 23 have the same configuration as that of the mounting surfaces 9b and 21b of the hot plates 9 and 21 and are respectively disposed between the blocks 7 and 19 on the one hand and the thermal insulating plates 11 and 23 on the other.

Next, the adjustment of the mounting positions of the hot plates 9 and 21 will be explained. In this embodiment, the mounting positions of the hot plates 9 and 21 are adjusted by using adjustment pins 83 and 85. Each adjustment pin 83 has a mounting shank portion 83a engaged with a threaded hole 7f formed in the mounting block 7. The adjustment pin 83 further has an eccentric shank portion 83b that is eccentric with respect to the mounting shank portion 83a. The eccentric shank portion 83b is narrower than the mounting shank portion 83a and fitted in a slot 9e (described above) formed in the hot plate 9 at a position corresponding to the adjustment pin 83 (see Fig. 8). The diameter of the eccentric shank portion 83b is substantially equal to the vertical width of the slot 9e. The same is the case with the adjustment pins 85 mounted to the second mounting block 19. Accordingly, by rotating the adjustment pins 83 and 85 appropriately, it is possible to adjust the vertical positions and inclinations in a vertical plane of the hot plates 9 and 21 when mounted and also possible to adjust the height positions of the opposing pressing surfaces 9a and 21a of the hot plates 9 and 21 to the same level. After the completion of the adjustment, the adjustment pins 83 and 85 are fixed by using nuts 84 and 86. Although in this embodiment spring washers 87 and 88 are used as urging members that urge the bolts 15 and 27, compression coil springs may be used as the urging members. Although the second embodiment does not use the fall-preventing plates 55 and 65 for the bolts 15 and 27, which are used in the first embodiment, the fall-preventing plates 55 and 65 may be used if necessary.

It should be noted that the sealing condition in which the hot plates 9 and 21 are pressed against each other will be clear from the explanation made in connection with the first embodiment; therefore, a redundant explanation thereof is omitted herein. In this embodiment, the hot plates 9 and 21 have been curvedly formed in advance, allowing for an amount of deformation due to heating, and when deformed upon heating, the hot plates 9 and 21 are prevented from being restrained by the mounting blocks 7 and 19. Therefore, the pressing surfaces 9a and 21a of the hot plates 9 and 21 can keep a satisfactory flatness during heating. In addition, the liners 53 and 63 are formed in the same configuration as that of the mounting surfaces 9b and 21b of the hot plates 9 and 21. Therefore, the difference in the temperature distribution in the sealing direction of the hot plates 9 and 21 reduces. In addition, because the adjustment pins 83 and 85, each having an eccentric shank portion, are used for the adjustment of the positions of the hot plates 9 and 21, the positional adjustment of the hot plates 9 and 21 can be performed very accurately.

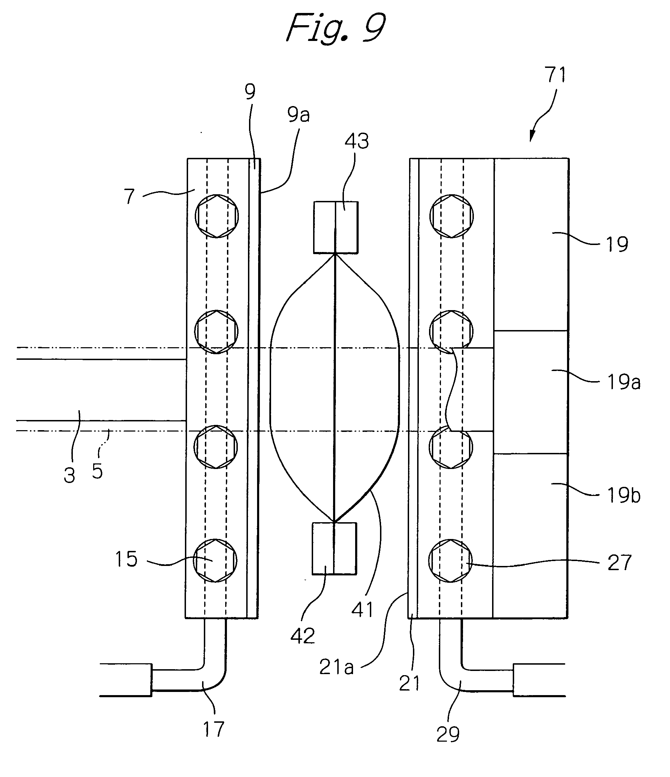

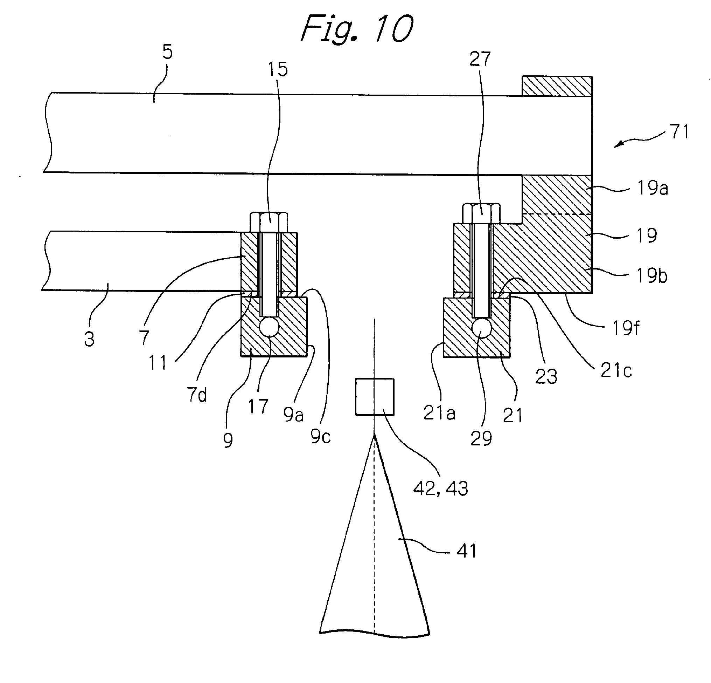

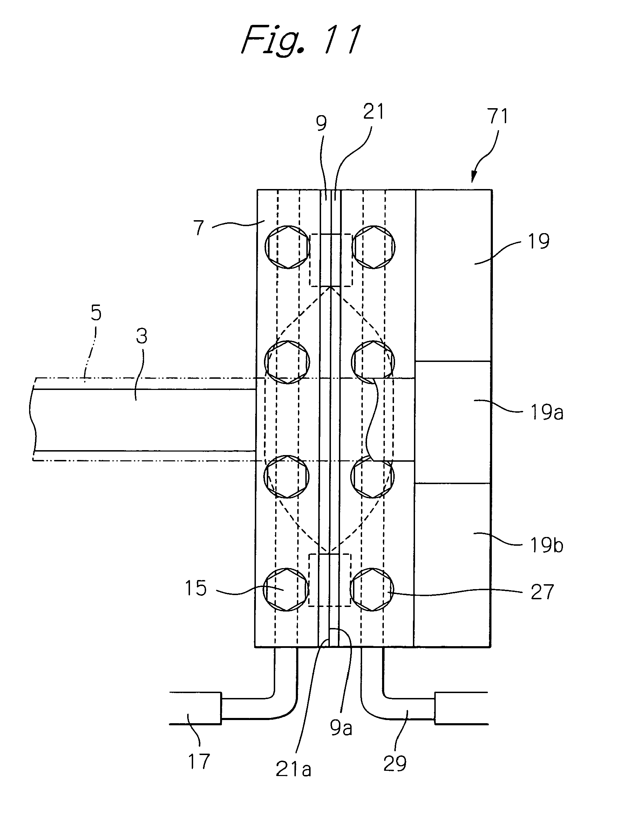

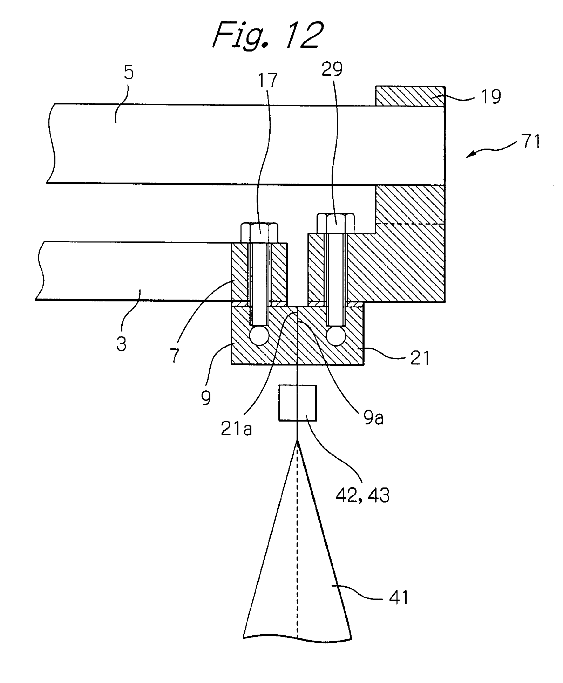

Next, a heat-sealing apparatus 71 according to a third embodiment of the present invention will be explained with reference to Figs. 9 to 12. Figs. 9 and 10 are a plan view of a sectional side view, respectively, showing the heat-sealing apparatus 71 in a state where hot plates are separate from each other. Figs. 11 and 12 are a plan view and a sectional side view, respectively, showing the heat-sealing apparatus 71 in a state where the hot plates are pressed against each other. In the figures, members corresponding to the members in the related art shown in Figs. 13 to 16 are denoted by using the same reference numerals as those in the related art, and a detailed description thereof is omitted herein.

The heat-sealing apparatus 71 differs from the related art shown in Figs. 13 to 16 in that the hot plates 9 and 21 are secured to the blocks 7 and 19 at surfaces thereof that are substantially perpendicular to the pressing surfaces 9a and 21a of the hot plates 9 and 21. In this embodiment, the hot plates 9 and 21 are secured at the upper surfaces thereof to the blocks 7 and 19, specifically to the lower surfaces thereof. With this arrangement, the hot plates 9 and 21 will not be curved in a horizontal plane even if they may be curved in a vertical plane, i.e. in a plane parallel to the surfaces of the bag. Accordingly, although there is a possibility of a sealed portion being formed such that its central portion in the width direction is slightly curved upward convexly, sealing itself can be performed satisfactorily.

That is, a support surface 7d is formed flat on the bottom of the first block 7 secured to the distal end of a first advancing and retracting shaft 3. The first hot plate 9 has a mounting surface 9c formed on the upper surface thereof. The first hot plate 9 is secured at the mounting surface 9c to the support surface 7d of the first block 7 with a thermal insulating plate 11 interposed therebetween. The first hot plate 9 is integrally secured to the block 7 by using bolts 15. Meanwhile, a support surface 19f is formed flat on the bottom of a body portion 19b of the second block 19 secured to the distal end of a second advancing and retracting shaft 5. The second hot plate 21 has a mounting surface 21c formed on the upper surface thereof. The second hot plate 21 is secured at the mounting surface 21c to the support surface 19f of the second block 19 with a thermal insulating plate 23 interposed therebetween. The second hot plate 21 is integrally secured to the body portion 19b of the block 19 by using bolts 27.

As has been stated above, the blocks 7 and 19 and the hot plates 9 and 21 are integrally connected, respectively, in the same way as in the related art. Therefore, when the temperature of the hot plates 9 and 21 rises or lowers, the hot plates 9 and 21 may be curvedly deformed as in the case of the related art. However, unlike in the related art, the curvature of the hot plates 9 and 21 occurs only in a plane extending vertically at right angles to the plane of Fig. 9. Therefore, the pressing surfaces 9a and 21a of the hot plates 9 and 21 are kept flat. Accordingly, when the hot plates 9 and 21 are pressed against each other, as shown in Figs. 11 and 12, the pressing surfaces 9a and 21a closely contact each other with a bag 41 held therebetween. Thus, sealing is performed satisfactorily. Although in the above-described example the hot plates 9 and 21 are secured to the respective lower sides of the blocks 7 and 19, it is also possible to adopt an arrangement in which the hot plates 9 and 21 are secured to the respective upper sides of the blocks 7 and 19. In such a case, for example, the second advancing and retracting shaft 5 is arranged so as to avoid interference with the bag 41.

It should be noted that it is possible also in this embodiment to adopt the arrangement used in the first embodiment to mount the hot plates 9 and 21 to the blocks 7 and 19, respectively. By doing so, the above-described curvature of the hot plates 9 and 21 in the plane perpendicular to the plane of Fig. 9 is also prevented. Consequently, a seal is formed straight.

As has been stated above, this embodiment enables the pressing surfaces 9a and 21a of the hot plates 9 and 21 to be kept flat even if the hot plates 9 and 21 are curved. Therefore, sealing can be performed satisfactorily. There is no need for any complicated adjustment to obtain the desired flatness of the pressing surfaces 9a and 21a as in the related art.

It should be noted that the present invention is not limited to the foregoing embodiments but can be modified in a variety of ways.

## Claims

1. A heat-sealing apparatus (50,81) comprising:
a pair of opposed hot plates (9,21); and
a pair of hot plate-mounting blocks (7,19) to which said hot plates (9,21) are mounted, respectively;
wherein superimposed film sheets are pressed between said hot plates (9,21) to thermoweld them together;
said heat-sealing apparatus being **characterized in that**
said hot plates (9,21) respectively have:
pressing surfaces (9a,21a)adapted to be pressed against each other with said film sheets held therebetween during sealing; and
mounting surfaces (9b,21b) formed at opposite sides to said pressing surfaces (9a,21a);
said hot plate-mounting blocks (7,19) respectively having support surfaces (7a,19c) that retain said mounting surfaces (9b,21b), respectively;
wherein said hot plates (9,21) are mounted to said hot plate-mounting blocks (7,19) in such a manner that said mounting surfaces (9b,21b) are pressed against said support surfaces (7a,19c), and that said hot plates (9,21) can thermally expand and contract in a sealing direction without being restrained by said hot plate-mounting blocks (7,19).

2. The heat-sealing apparatus (50,81) of claim 1, **characterized in that** a constituent material of said hot plates (9,21) and a constituent material of said hot plate-mounting blocks (7,19) differ in thermal expansion coefficient from each other.

3. The heat-sealing apparatus (50) of claim 1 or 2, **characterized in that** said hot plates (9,21) are retained by said support surfaces (7a,19c) at a part of said mounting surfaces (9b,21b).

4. The heat-sealing apparatus (81) of claim 1 or 2, **characterized in that** said hot plates (9,21) are formed so that said pressing surfaces (9a,21a) are concavely or convexly curved in a horizontal plane at an ordinary room temperature, and said pressing surfaces (9a,21a) become flat when said hot plates (9,21) are heated to a predetermined sealing temperature.

5. The heat-sealing apparatus (50) according to any one of claims 1 to 4, **characterized in that** said hot plate-mounting blocks (7,19) have guide portions (57,59,67,69) that abut against said hot plates (9,21) to position said hot plates (9,21) in a vertical direction.

6. The heat-sealing apparatus (81) according to any one of claims 1 to 4, **characterized in that** said apparatus (81) further comprises:
adjustment pins (83,85) provided for said hot plate-mounting blocks (7,19), respectively, said adjustment pins (83,85) each having:
a mounting shank portion (83a,85a) mounted to an associated one of said hot plate-mounting blocks (7,19) in such a manner that a position thereof in a rotational direction is adjustable; and
an eccentric shank portion (83b,85b) that is eccentric with respect to said mounting shank portion (83a,85a) and that extends toward an associated one of said hot plates (9,21);
said mounting surfaces (9b,21b) of said hot plates (9,21) having slots (9e,21e) elongated in the sealing direction, each of said slots (9e,21e) being capable of accommodating said eccentric shank portion (83b,85b).

7. The heat-sealing apparatus (58,81) of any one of claims 1 to 6, **characterized in that** said hot plates (9,21) are each secured to one end of each of a plurality of shaft-shaped members (15,27) spaced in the sealing direction and inserted through respective holes (7b,19b) formed in the associated one of said hot plate-mounting blocks (7,19), said shaft-shaped members (15,27) being urged by urging members (51,61,87,88) toward the other ends thereof, wherein all said shaft-shaped members (15,27), except at most one of them, are provided with clearances in said holes (7b,19b) at least in said sealing direction.

8. The heat-sealing apparatus (50) of claim 7, **characterized in that** said apparatus (50) further comprises fall-preventing plates (55,65) that prevent movement of said shaft-shaped members (15,27) away from said hot plates (9,21).

9. The heat-sealing apparatus (81) according to any one of claims 1 to 4, **characterized in that** said hot plates (9,21) are each fixedly secured to an associated one of said hot plate-mounting blocks (7,19) at one portion thereof, said heat-sealing apparatus further comprising:
one or more shaft-shaped members (83,85) provided for each combination of each of said hot plates (9,21) and an associated one of said hot plate-mounting blocks (7,19), said one or more shaft-shaped members (83,85) being spaced in the sealing direction and each mounted at one end thereof (83a,85a) to either one of said hot plate (9,21) and hot plate-mounting block (7,19) of said combination, the other end (83b,85b) of each of said one or more shaft-shaped members (83,85) extending toward the other of said hot plate (9,21) and hot plate-mounting block (7,19) of said combination and inserted into a hole (9e,21e) formed in said the other of said hot plate (9,21) and hot plate-mounting block (7,19) of said combination with a clearance at least in said sealing direction.

10. The heat-sealing apparatus (81) of claim 9, **characterized in that** said one or more shaft-shaped members (83,85) are each mounted at said one end (83a,85a) in such a manner that a position thereof in a rotational direction is adjustable, said the other end (83b,85b) of each of said one or more shaft-shaped members (83,85) being eccentric with respect to said one end (83a,85a), and said hole (9e,21e) is a slot elongated in said sealing direction.

11. A heat-sealing apparatus (71) comprising:
a pair of opposed hot plates (9,21); and
a pair of hot plate-mounting blocks (7,19) to which said hot plates (9,21) are mounted, respectively;
wherein superimposed film sheets are pressed between said hot plates (9,21) to thermoweld them together;
said heat-sealing apparatus (71) being **characterized in that**:
said hot plates (9,21) respectively have:
pressing surfaces (9a,21a) adapted to be pressed against each other with said film sheets held therebetween during sealing; and
mounting surfaces (9c,21c) formed on respective surfaces extend substantially perpendicular to said pressing surfaces (9a,21a);
said hot plates (9,21) being mounted on respective support surfaces (7d,19f) formed on said hot plate-mounting blocks (7,19).

12. The heat-sealing apparatus (71) of claim 11, **characterized in that** a constituent material of said hot plates (9,21) and a constituent material of said hot plate-mounting blocks (7,19) differ in thermal expansion coefficient from each other.
